# EUROPÄISCHE PATENTSCHRIFT

(11) **EP 0 976 366 B1**
(45) Veröffentlichungstag und Bekanntmachung des Hinweises auf die Patenterteilung: **19.01.2011**
(21) Anmeldenummer: 99890252.2
(22) Anmeldetag: 28.07.1999
(51) Int. Cl.: A61C 1/05, A61C 1/18

(54) **Filter für Spraykanäle dentaler oder chirurgischer Handstücke**
Filter for fluid channels in dental or chirurgical handpieces
Filtre pour des canaux de fluide dans les pièces à main dentaires ou chirurgicales

(30) Priorität: 31.07.1998 AT 132598
(43) Veröffentlichungstag der Anmeldung: 02.02.2000
(73) Patentinhaber: W & H Dentalwerk Bürmoos GmbH, 5111 Bürmoos (AT)
(72) Erfinder: Schatz, Norbert, 5111 Bürmoos (AT)
(74) Vertreter: Patentanwälte Barger, Piso & Partner

(56) Entgegenhaltungen:
- EP-A- 0 591 953
- EP-A- 0 661 024

## Beschreibung

Die Erfindung betrifft ein Filter für Spraykanäle dentaler oder chirurgischer Handstücke gemäß den Merkmalen des einleitenden Teils des Anspruches 1.

Dentale bzw. chirurgische Handstücke verfügen über extrem dünne Kanäle durch die Spraywasser und/oder Sprayluft zur Instrumentenspitze geleitet wird, von wo das Medium, zumeist in Form eines Sprays (daher kommt auch der Name), zur Kühlung und Entfernung von abgetragenem Zahn- oder Knochenmaterial auf den Arbeitsbereich gesprüht wird.

Durch die extrem geringen Durchmesser der Spraykanäle im Instrument kommt es verschiedentlich zum Verstopfen derselben.

Die naheliegendste Lösung dieses Problems, in der Versorgungseinheit einen entsprechenden Feinfilter vorzusehen, wird aus verschiedenen Gründen nicht angewandt. Einer davon ist, dass ein nicht unbeträchtlicher Teil der Verunreinigungen von den O-Ring-Dichtungen zwischen dem Versorgungsschlauch und dem Handstück stammt. Diese O-Ringe werden beim Aufsetzen bzw. beim Abnehmen der Handstücke auf Scherung beansprucht, was im Zusammenwirken mit der Geometrie der Kupplung zum Abrieb kleiner Gummipartikel führt.

Dazu muss noch darauf hingewiesen werden, dass die Hersteller der Versorgungseinheiten, in denen sich auch verschiedene Regelungs- und Steuerungsgeräte für die zahnärztlichen bzw. chirurgischen Handstücke befinden, üblicherweise nicht von den Herstellern der Handstücke stammen, sondern von eigenen Unternehmen, die sich auf den Spitals- und Medizinbedarf spezialisiert haben.

Da die Benutzer der Handstücke aber dennoch so weit wie irgend möglich vor diesen Problemen geschützt werden sollen und da die Reparaturen im Falle des Verstopfens der Leitungen von Wartungsdienst der Hersteller der Handstücke vorgenommen werden müssen, besteht ein zunehmender Bedarf am Schaffen von Filtern, um das Handstück zu schützen.

Dazu gibt es beispielsweise die Lösung gemäß der EP 0 591 953 A, die vorsieht, zylindrische Filterpatronen in den Bereich zwischen dem Versorgungsschlauch und dem Handstückkopf, einzubauen, was allerdings viel Platz erfordert und darüberhinaus das periodische Auswechseln der Patronen notwendig macht. Wenn diese Tätigkeit auch einer Reparatur vorzuziehen ist, so ist sie doch für den Arzt bzw. dessen Gehilfen, der sie vorzunehmen hat, eine unangenehme feinmechanische Tätigkeit, die möglichst lange hinausgezögert wird und so dazu führt, dass das Gerät auch noch betrieben wird, wenn der Filter eigentlich schon unzulässig verstopft ist und zu Druckabfall führt.

Eine andere Lösung ist in der US 5 716 210 A, entsprechend der EP 0 661 024 A, vorgeschlagen Zwischen das Handstück und den Versorgungsschlauch wird ein Filterstück eingefügt, das mit den jeweils korrespondierenden Anschlüssen für den Versorgungsschlauch und das Handstück versehen ist. Der Vorteil liegt in der leichten Austauschbarkeit, der Nachteil in den hohen Kosten für ein solches Zwischenstück und in der mechanischen Problematik, die bei einer Verdoppelung aller lösbaren Verbindungen immer gegeben ist, und natürlich in der Tatsache, dass dieses Filterstück stromaufwärts der O-Ring-Dichtungen des Handstückes liegt.

Dazu kommt, dass die Filter selbst so klein sind, dass sie in einer Vielzahl von Fällen bereits beim Ausfiltern von wenigen Teilchen einen Großteil ihrer Poren verstopft haben und nicht mehr arbeitsfähig sind. Dies liegt hauptsächlich darin, dass die Filterfläche innerhalb des Querschnittes des Spraykanals liegen muss und daher jedenfalls auch im freien Zustand schon zu einer deutlichen Verringerung des zur Verfügung stehenden Querschnittes führt.

Die Erfindung sieht eine Lösung vor, die die Nachteile der vorbekannten Konstruktionen nicht aufweist und günstig herzustellen ist, wobei über auch längere Betriebszeiträume und zunehmende Anhäufung zurückgehaltener Partikel noch ein ausreichender Querschnitt zur Verfügung steht, um eine genügende Sprayleistung zu erlauben. Weiters soll das Filter leicht und ohne Zerlegung des Handstückes zu reinigen sein. Erfindungsgemäß werden diese Ziele durch das Hanstück des Anspruches 1 erreicht.

Durch diese Maßnahme erreicht man, dass die durch den Versorgungsschlauch in den Kupplungsbereich gelangenden auszufilternden Fremdkörper am Innenumfang des Handstückes hängen bleiben, wo sie, wenn das Handstück vom Versorgungsschlauch abgenommen wird, abfallen und unter Umständen durch leichtes Ausklopfen entfernt werden können.

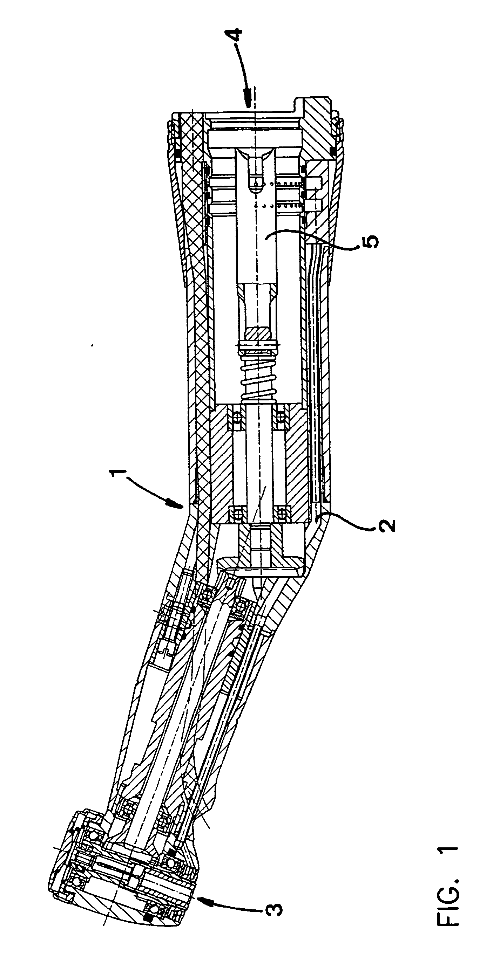

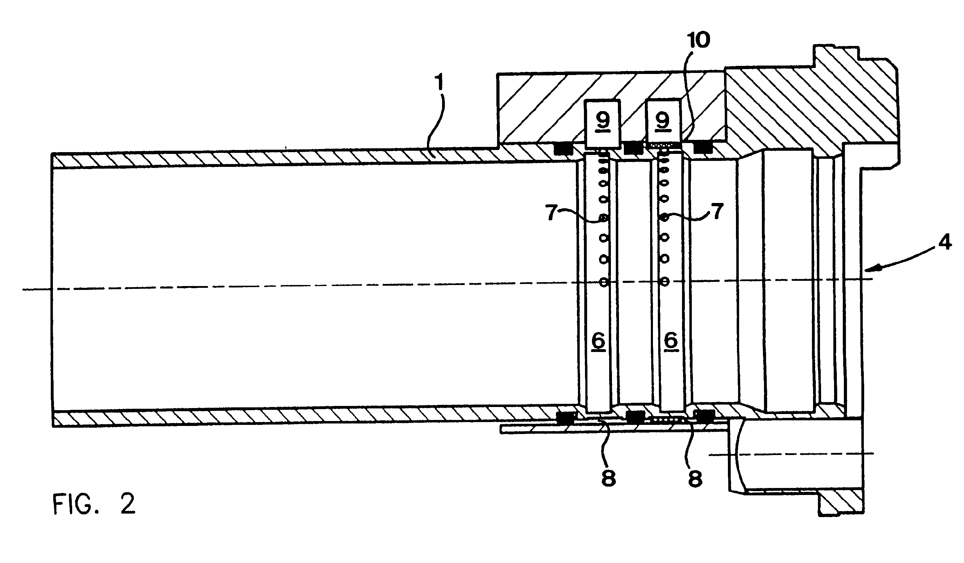

Die Erfindung ist in der beiliegenden Zeichnung dargestellt und wird an Hand dieses Ausführungsbeispieles näher erläutert. Dabei zeigt die Fig. 1 eine erfindungsgemäß ausgestaltetes Handstück im Schnitt und die Fig. 2 eine vergrößerte Detailansicht.

Das dargestellte Handstück 1 weist eine Sprayzuleitung 2 für Luft bzw. Wasser auf. Eine weitere Zuleitung, die das zweite Medium, Wasser bzw. Luft, fuhrt, ist in Umfangsrichtung versetzt zur Sprayleitung 2 angeordnet und nicht dargestellt. Der dargestellte Schnitt ist nicht eben, sondern so geführt, daß er durch die Sprayleitung 2 führt.

Am Kopf 3 des Handstückes 1 sind zwei übereinander angeordnete Verteilerkanäle vorgesehen, von denen einer durch die Sprayleitung 2, der andere durch die nicht sichtbare Sprayleitung mit dem entsprechenden Medium versorgt wird. Der untere Verteilerkanal ist mittels Düsen zur Umgebung hin geöffnet, wobei die Düsen so ausgebildet sind, daß sie einen Wasser-Luft-Spray auf die Arbeitsstelle richten. Dieser Spray wird dadurch gebildet, daß auch die beiden Verteilerkanäle untereinander mittels Öffnungen in Verbindung stehen, so daß beim Durchströmen der beiden Medien durch die beiden Verteilerkanäle und schließlich durch die nach außen führenden Düsen der gewünschte Spray erzeugt wird.

Dies ist bekannt und führt, wie einleitend ausgeführt, immer wieder zu Verstopfungen im Bereich der Verteilerkanäle bzw. der Düsen oder der Verbindungskanäle zwischen den Verteilerkanälen, da dort die kleinsten Querschnitte der gesamten Spraykanäle auftreten. Es ist leicht ersichtlich, daß Reparaturen in diesem Bereich des Instrumentes kompliziert und teuer sind und keinesfalls in der Arztpraxis oder im Spital erfolgen können, sondern den Transport des Gerätes zu einer Servicestelle notwendig machen.

Die erfindungsgemäße Lösung des Problems erfolgt am anderen Ende des Handstückes 1, nämlich am Kupplungsende 4. In die dort befindliche Öffnung wird das instrumentenseitige Ende eines Versorgungsschlauches eingeführt, dessen Kupplungsstück an passenden Stellen einen Antrieb, eine Lichtquelle und die Zufuhr der Sprayluft und des Spraywassers aufweist. Es können auch andere Medien, beispielsweise elektrische Energie, zugeführt werden, doch berührt dies die vorliegende Erfindung nicht weiter.

Es können auch andere Kupplungen vorgesehen sein, bei denen beispielsweise statt der mechanischen Antriebsenergie für die Welle 5 des Handstückes 1 Elektrizität für einen Mikromotor oder Druckluft für eine Turbine dem entsprechenden Handstück zugeführt wird. Auch dies beeinträchtigt üblicherweise die Ausführung der Erfindung nicht bzw. können dabei auftretende Platzprobleme vom Fachmann auf dem Gebiete des Handstückbaues in Kenntnis der Erfindung leicht umgangen bzw. beseitigt werden.

Die erfindungsgemäßen Maßnahmen sind am besten aus Fig. 2 erkennbar: Das dargestellte kupplungsseitige Ende eines Handstückes 1 ist mit zumindest einer ringförmigen Nut 6 im axialen Bereich der Übergabe eines Spraymediums versehen. Im Nutboden sind eine Vielzahl von Filteröffnungen 7 vorgesehen, von denen einige schematisch in Fig. 2 dargestellt sind. Nach Durchtritt durch diese Filteröffnungen 7 findet sich das jeweilige Spraymedium in einem weiteren Ringkanal oder Sammelkananl 8, in dem es gesammelt wird und über eine Abzugskaverne 9 der eigentlichen Sprayleitung 2 (Fig. 1) zugeführt wird.

Es ist leicht ersichtlich, daß bei zunehmender Verstopfung der Filteröffnungen 7 die Verunreinigung durch Abnahme des Handstückes 1 vom Versorgungsschlauch, so ist es in Fig. 1 und 2 auch dargestellt, durch leichtes Ausklopfen oder durch Bürsten mit einer weichen Bürste leicht entfernt werden können, ohne daß es dazu besondere Kenntnisse oder Vorrichtungen bedarf.

In Fig. 2 ist eine Ausgestaltung der Erfindung im rechten der beiden dargestellten Spraykanäle eingezeichnet: Ein Flachgummiring 10 liegt an der Außenseite der Ringnut 6 locker an und wird durch das radial von innen nach außen tretenden Spraymedium abgehoben, so daß es zur Abzugskaverne 9 und von dort in den eigentlichen Spraykanal 2 eintreten kann.

Wird der Motor abgeschaltet, kommt es auch in den Spraykanälen, wie dies von den Turbinen und Motoren von Handstücken bekannt ist, zu Rücksaugeffekten, durch die kontaminierte Materialen, wie Blut, Speichel oder Abrieb, auch in die Spraykanäle gezogen werden und zur Infektionsgefahr für den nächsten Patienten führen. Wenn im Spraykanal zufolge der geringen Abmessung der Düsen im Handstückkopf 3 diese Gefahr auch gering ist, so ist sie doch nicht vernachlässigbar, wie es im Stand der Technik bereits erkannt wurde.

Es wird dazu auf die EP 0 230 010 B verwiesen, deren Fig.12 eine ähnliche Maßnahme zeigt, aber einen O-Ring verwendet, der wegen seiner schlechten Dehnbarkeit für diese Aufgabe nicht gut geeignet ist und beim erfindungsgemäßen Vorhandensein vieler Öffnungen 7 völlig versagen müßte.

Die Erfindung ist nicht auf das dargestellte Ausführungsbeispiel beschränkt, sondern kann verschiedentlich abgewandelt werden. So ist es möglich, andere als kreisförmige Löcher zu wählen und die Löcher in Abhängigkeit von der gewünschten Filterleistung in ihren Abmessungen entsprechend auszuwählen.

Auch ist es möglich, Filterleistungen zu erreichen, wie sie beispielsweise in den oben genannten Druckschriften als Ziel dargestellt werden, wonach auch Verunreinigungen von molekularer Größe zurückgehalten werden sollen. In diesem Fall kann außerhalb oder auch statt des Flachgummiringes 10 ein ringförmiger Filter verwendet werden, der durch die Vorfiltrierung durch die Filteröffnungen 7 und die große zur Verfügung stehende Fläche eine wesentlich längere Betriebsdauer aufweist als die vorbekannten Filterpatronen oder Filterscheiben.

Zu all den genannten Vorteilen kommt noch, daß die mechanische Stabilität des Handstückes bzw. der Verbindung zwischen Handstück und Kupplung nicht leidet und daß dabei die Außenabmessungen des Handstückes unverändert bleiben.

Es müßen die Abmessungen an den ringförmigen Nuten 6 nicht die dargestellte Proportion aufweisen, sondern können breiter oder auch schmäler gewählt werden, wobei nur auf die zumeist vorgegebenen Abmessungen des schlauchseitigen Kupplungsstückes Bedacht genommen werden muß.

Der verwendete Flachgummiring 10 hat gegenüber dem zu solchen Zwecken vorbekannten O-Ring, der wegen der flächigen Ausbildung der Nutaußenseite nicht anwendbar ist, auch den Vorteil, mit geringerer Kraft an der Peripherie anzuliegen und so leicht abhebbar zu sein, er kann auch in einer leicht zu dehnenden Variante verwendet werden, so daß er leichter abzuheben ist als der vorbekannte O-Ring.

## Patentansprüche

1. Dentales oder chirurgisches Handstück (1), das ein kupplungsrohr
zur Kupplung des Handstücks (1) mit einem Versorgungsschlauch,
eine Sprayleitung (2) und einen Fitter aufweist, wobei der Filter eine Mehrzahl von
Filteröffnungen (7) aufweist, die auf einer im wesentlichen zylindrischen Mantelfläche des Filters angeordnet sind, wobei die Mantelfläche am Kupplungsrohr des Handstückes (1)
liegt, wobei im Handtstück (1) radial außerhalb der Fitteröffnungen (7) ein Sammelkanal (8) vorgesehen ist, der mit der
Sprayleitung (2) des Handstückes (1) verbunden ist.

2. Filter nach Anspruch 1, **dadurch gekennzeichnet, dass** sowohl der Sammelkanal (8) als auch die Sprayleitung (2) in eine Abzugskaverne (9) münden.

3. Filter nach einem der vorstehenden Ansprüche, **dadurch gekennzeichnet, dass** an der äußeren Mantelfläche ein elastisches, ringförmig geschlossenes, flaches Band, bevorzugt ein Flachgummiring (10), angeordnet ist.

4. Filter nach einem der Ansprüche 1 bis 3, **dadurch gekennzeichnet, dass** stromabwärts der Filteröffnungen (7), bevorzugt im Bereich des Sammelkanals (8), ein Feinfilter angeordnet ist

## Claims

1. A dental or surgical handpiece (1), which comprises a coupling pipe for coupling the handpiece (1) with a supply tube, a spray line (2), and a filter, whereby the filter has a plurality of filter openings (7), which are provided on an essentially cylindrical lateral surface of the filter, whereby the lateral surface lies on the coupling pipe of the handpiece (1) whereby, in the handpiece (1) radially outside of the filter openings (7), a collection duct (8) is provided, which is connected with the spray line (2) of the handpiece (1).

2. Filter according to claim 1, **characterised in that** the collection duct (8) as well as the spray line (2) open out into a discharge space (9).

3. Filter according to any one of the preceding claims, **characterised in that**, on the outer lateral surface, an annularly closed flat elastic strip, preferably a flat rubber ring (10), is provided.

4. Filter according to any of claims 1 to 3, **characterised in that** a fine filter is provided downstream of the filter openings (7), preferably in the area of the collection duct (8).

## Revendications

1. Poignée porte-outil dentaire ou chirurgicale (1), qui comporte un tube de couplage pour coupler la poignée porte-outil (1) à un tuyau d'alimentation, une conduite de spray (2) et un filtre, le filtre présentant une pluralité d'orifices de filtre (7), qui sont agencés sur une surface d'enveloppe périphérique sensiblement cylindrique du filtre, la surface d'enveloppe périphérique se situant au niveau du tube de couplage de la poignée porte-outil (1), et un canal collecteur (8), qui est relié à la conduite de spray (2) de la poignée porte-outil (1), étant prévu dans la poignée porte-outil (1), radialement à l'extérieur des orifices de filtre (7) .

2. Filtre selon la revendication 1, **caractérisé en ce qu'**aussi bien le canal collecteur (8) que la conduite de spray (2) débouchent dans une cavité de soutirage (9).

3. Filtre selon l'une des revendications précédentes, **caractérisé en ce que** sur la surface d'enveloppe périphérique extérieure est agencé une bande plate, élastique, en forme d'anneau fermé, de préférence un anneau plat en caoutchouc (10).

4. Filtre selon l'une des revendications 1 à 3, **caractérisé en ce qu'**en aval des orifices de filtre (7), de préférence dans la zone du canal collecteur (8), est agencé un filtre fin.
